# EUROPEAN PATENT APPLICATION

(11) **EP 1 683 734 A1**
(43) Date of publication of application: **26.07.2006**
(21) Application number: 06100250.7
(22) Date of filing: 11.01.2006
(51) Int. Cl.: B65D 65/46, A23D 9/00, A23L 1/01, A23L 1/00

(54) **Food modifier transferable article**

(30) Priority: 20.01.2005 US 38697
(71) Applicant: KRAFT FOODS HOLDINGS, INC., Northfield, Illinois 60093 (US)
(72) Inventor: Darin, Neil Edward, Grayslake, Illinois 60030 (US); Ludwig, Cathy Jean, Grayslake, Illinois 60030 (US); Gaonkar, Anilkumar Ganapati, Buffalo Grove, Illinois 60089 (US); Windsor, Nicole Lee, Chicago, Illinois (US)
(74) Representative: Smaggasgale, Gillian Helen

(57) **Abstract**

The present invention generally relates to an article transferring food modifiers to foods in contact therewith. The article comprises a coating supported on a support member, wherein the coating comprises a carrier material containing lipid which releasably retains a food modifier. The article provides for heat-activated transfer or water-activated transfer of a food modifier from the coating to food materials in contact therewith.

## Description

### FIELD OF THE INVENTION

The present invention generally relates to articles for delivering a food modifier to foods, and particularly, articles having a heat-sensitive and/or moisture-sensitive coating allowing heat-activated and/or moisture-activated transfer of the food modifier from the coating to the contacted foods.

### BACKGROUND OF THE INVENTION

Food additives are often incorporated in food products to improve the sensory perception of the food products by a consumer. Food additives, such as seasonings, spices, acids, tenderizers, colorants, browning agents, and the like, can and do enhance the eating experience. However, the purchase and storage of the many different types of food additives which potentially may be useful in various food preparations can be onerous and costly. A food additive added directly to a food product during its shelf life will not only need to have a comparable shelf life but also must not adversely interact with the food product during such storage periods before cooking. It would be preferable to allow food consumers to retain more freedom and flexibility of choice in the particular seasonings to be used in their own cooked food entrees.

There remains a need for food technologies that can provide food preparers greater choice, convenience, control, and flexibility over the food seasonings or other modifications which they desire to make to their cooked meals. The present invention may be used to fulfill these, as well as other needs and objectives, as will be apparent from the following description of embodiments of the present invention.

### SUMMARY OF THE INVENTION

The present invention generally relates to an article for transferring food modifiers to foods in close proximity, and preferably in contact, therewith. The article comprises an edible coating supported on a support member, where the coating comprises a carrier material containing a lipid or mixture of lipids which releasably retains a food modifier. For purposes of this invention, the singular term "lipid" is to include mixtures of lipids as well. The lipid is heat-sensitive or moisture-sensitive such that the food modifier can be deposited onto the coating while the lipid is in a molten state, and then the food modifier can be immobilized in place by cooling or allowing the lipid to cool sufficient to resolidify. The resulting coated article can then be placed in close proximity, and preferably in direct contact, with a food product, providing a packaged food. When the packaged food is cooked or otherwise suffioiently heated, the lipid remelts or dissolves suffioiently to release the food modifier for transfer to a food surface in contact therewith. For purposes of this invention, "in contact" is intended to include both direct contact as well as in close proximity to the food product so long as the released food modifier is transferred to the food product.

In one aspect, the food modifier transferable article has a coating supported on a support member where the coating comprises a lipid carrier material having a melting point exceeding room temperature (e.g., about 65 to about 85°F) such that the physical state of the lipid can be manipulated between molten and solid phases on demand in a highly useful and convenient manner. In particular, the physical state of the lipid can be readily and reversibly switched between molten and solid phases by process temperature management to the particular phase conducive for each of coating carrier material formation, food modifier deposition in the coating carrier material, food modifier immobilization on or in the coating carrier material, and ultimately release and transfer of the food modifier from the coating to a food surface during food cooking.

In another aspect, the food modifier transferable article has a coating supported on a support member where the coating comprises a moisture sensitive lipid carrier material such that the physical state of the lipid can be manipulated between solid and dissolved phases on demand in a highly useful and convenient manner. In particular, the physical state of the lipid can be readily converted from solid phase to the dissolved phase by moisture management for ultimate release and transfer of the food modifier from the coating to a food surface during food cooking. For example, the lipid material could be coated on the interior surface of a cooking container for release upon contact with water during cooking.

Using the food modifier transferable article in accordance with aspects of the present invention, a food preparer can conveniently and effectively modify a food product (e.g., boost or impart flavor or aroma, tenderize, and the like) during cooking and/or other comparable heating of the food product before it is consumed, and thereby enhance the eating experience. The delivery of food enhancements via packaging materials in accordance with aspects of the present invention increases food preparation convenience. Food preparers can benefit by use of the ingredient delivery system of the present invention through the delivery of unique food modifying ingredients in a pleasant and convenient form which reduces food seasoning supply needs, food preparation steps, and/or clean-up requirements of the food preparer.

In a particular aspect, the carrier material lipids are fats, such as hydrogenated vegetable fats, free fatty acids, trans fatty acids, waxes, lecithin, hydrogenated lecithins, steroids, phosphoglycerides, phospholipids, surfactants, mono-glycerides and derivatives thereof, di-glycerides and derivatives thereof, and combinations thereof having the desired heat-sensitive and/or moisture-sensitive properties. In a more particular aspect, the lipid is a hydrogenated vegetable fat selected from the group consisting of hydrogenated soybean fat, hydrogenated rapeseed fat, hydrogenated cottonseed fat, hydrogenated palm fat, hydrogenated palm kernel fat, hydrogenated coconut fat, and combinations thereof. In a particular aspect, the food modifier is selected from the group consisting of flavors, acids, spices, fortificants, meat tenderizers, colorants, browning agents, enzymes, crumbs, seeds, coatings, starch, flour, and the like. In a more particular aspect, the food modifier is selected from food seasonings, spices, meat tenderizers, and colorants. The food odifier optionally may be in form. In a particular aspect, the support member upon which the coating is formed is selected from the group consisting of plastic, paper, paperboard, metal, fabric, and lass. Thus, for example, the support member may be a plastic film, a paper sheet, a paperboard sheet, a metal foil (e.g., aluminum foil), a fabric sheet, or a glass member. The support member, which can be in the form of a film, sheet, coating, tray, bag, container, carton, can, lid, plate, utensil, or the like, preferably has a continuous and nonporous surface. In a particular aspect, the support member can be a plastic sheet material, parchment paper, or thermoformable plastic tray which is nondegradable at temperatures up to about 450°F. In a more particular aspect, the support member can be an aluminum foil sheet, film, or drawn article which is which is nondegradable at temperatures up to about 700°F.

The present invention also relates to the processes for making and using the food modifier transferable article to package food, the packaged foods obtained therewith, and to the food modifier transferable article. In one aspect, the article is flexible enough to be used as a wrapping film which can be wrapped around a food product to contact multiple surfaces or surround the food product with a coated side of the article.

### BRIEF DESCRIPTION OF THE FIGURE

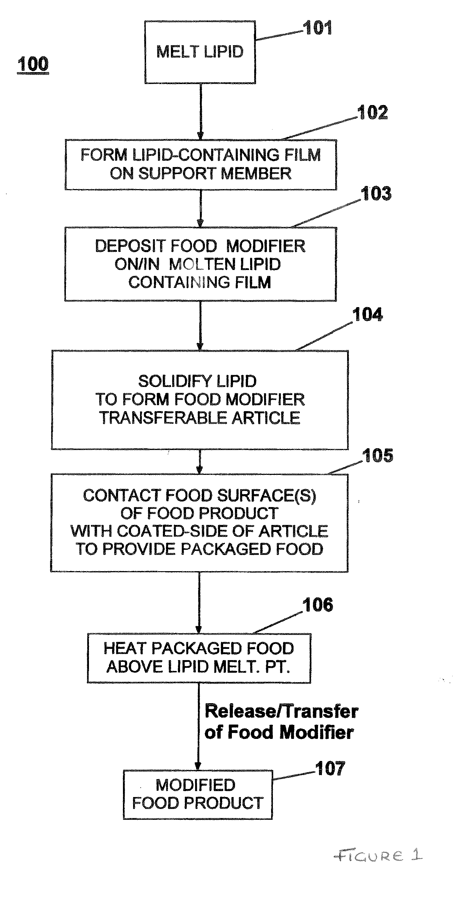

Figure 1 shows a flow chart for making and using a food product packaged with a food modifier transferable article in accordance with an embodiment of this invention.

### DETAILED DESCRIPTION OF PREFERRED EMBODIMENTS OF THE INVENTION

The present invention relates to an article for modifying food products which provides for thermally-induced transfer of a food modifier from a coated support member to a food surface during cooking or other food heating procedures.

Referring to the Figure, a process 100 is shown for making and using a food modifier transferable article in accordance with an embodiment of this invention.

In step **101,** a solid or semi-solid lipid-containing material is heated sufficient to melt and transform it into a flowable mass.

In step **102,** the molten, flowable lipid mass is deposited onto a surface of a self-supporting support member and formed into a film of substantially uniform thickness. In one aspect, while the lipid is still molten, the support member bearing the lipid can be pulled through pressure rollers to form a film having substantially uniform thickness and film coverage. In another embodiment, carrier material containing lipid material is heated to flowable sprayable state, and then is sprayed onto the support member to a desired film thickness. The carrier material containing lipid material can otherwise be conveniently applied to a surface of the support member by surface coating such as by brushing, roller coating, dipping, and so forth.

In step **103,** while the lipid is still in a molten and/or non-fully solidified state, the food modifier substance(s) is deposited onto and/or into the molten lipid material. Alternatively, additional food modifier substance(s) could be added by reheating the solidified lipid material, adding the substance(s), and resolidifying the lipid material. Of course, other methods may be used to apply the lipid material and/or food modifiers including, for example, application of the lipid material and the food modifiers at the same time.

In step **104,** the lipid is cooled or allowed to cool until it resolidifies, thereby immobilizing the food modifier material in place, thereby providing a food modifier transferable article in the form of a unitary article.

In step **105,** at least one surface of a food product is contacted with the coated-side of the article.

In step **106,** the packaged food is heated, such as during cooking, to a temperature at or above the melting point of the lipid component of the article coating. The softened and flowable lipid releases the food modifier sufficiently that it can transfer to the surface(s) of the contacted food product. This results in a beneficially modified food product **(107).**

The support member is a self-supporting member that is heat-tolerant. Thus, it is stable and generally maintains its structural integrity and does not significantly degrade (e.g., melt, char, combust, dissolve, emit smoke, and the like) when subjected to cooking temperatures used on foods packaged in the food odifier transferable article in accordance with embodiments of this invention. It also is a material to which the coating containing the lipid and food modifier can adhesively attach. In one preferred aspect, the support member preferably is a solid, continuous and nonporous upon which a coating can be formed.

Provided it has the requisite thermal-tolerance properties, the support member may be, for example, selected from among a plastic film, a paper sheet, a paperboard sheet, a metal foil, a fabric sheet, a thermoformable or injection grade plastic, a drawn article, a glass member, or similar film. The support member may be flexible or rigid. The plastic film may be, for example, a thermoplastic polymer such as polyolefin, vinyl comonomer, a hydrolyzed vinyl comonomer, polyurethane, nylon, polypropylene, an ionomer, a polyamide, a polyester, or a vinylidene chloride copolymer, as well as copolymers or blends thereof. In one preferred aspect, the support member comprises a plastic sheet material, parchment paper, or thermoformable plastic tray which is nondegradable at temperatures up to about 450°F. The paper sheet may be, for example, food grade Kraft paper, and so forth. The paperboard sheet may be a corrugated paperboard sheet. The metal foil may be thin aluminum foil which is nondegradable at temperatures up to about 700°F. The fabric sheet may be a woven fabric, knit fabric, or nonwoven web, such as formed from spun polyolefin or polyester fibers.

The films, foils, and sheets may be composites or multi-layer structures or laminates comprised of similar or diverse layers. They can be relatively stiff or flexible, depending on the food packaging application. For instance, for food wrapping type packaging applications, the film, sheet, or foil should be thin enough to permit a food product to be wrapped on multiple sides using the film. The support member also should have sufficient thickness to provide structural integrity (i.e., tear and puncture resistance) for the intended application. The coating is applied to at least one major surface of the sheet or film material. The coated side of the support member should be adjacent to, and contacting or in close proximity to, the food product.

The support member also may be a glass container (e.g., bottle or jar) or other type of cooking container (i.e., plastic or metal container). The support member may receive the coating on a surface thereof which will contact a food product (or beverage) packaged in the container. A food or beverage can be cold-filled in the container, and later heated when it is desirable to release the food modifier from the coating at the time of consumption of the edible contents. In addition, the support member may be coated with the lipid and food modifier containing coating, and then be hot-filled with a food or beverage to induce release of the food modifier at that time. Alternatively, the food modifier can be released by addition of water (dissolution release).

The coating formed on the support member comprises a carrier material which functions as a releasable binder relative to the food modifier.

In accordance with aspects of the present invention, the carrier material contains a lipid. The lipid is selected to have melt properties or moisture-sensitive properties which can be conveniently manipulated (1) to receive and immobilize food modifier, and (2) to be controllably induced to release the food modifier by heat-activation or water-activation during preparation or cooking of a food product in close proximity, and preferably in contact, with the coated side of the article.

The lipid or lipid composition preferably is in solid or crystallized form at room temperature (i.e., about 65 to about 85°F). In one aspect, the lipid is selected as one having a melting point in the range of about 85 to about 280°F, particularly about 100 to about 175°F, and more particularly about 110 to about 160°F. In another aspect, the lipid is in a solid non-flowable form at temperatures of about 85°F or less.

In a preferred aspect, the carrier material is predominantly composed of a lipid or mixture of lipids. In one aspect, the coating contains at least about 20 percent, particularly at least about 50 percent, more particularly at least about 90 percent, and even more particularly at least about 95 percent lipid content.

For purposes herein, the "lipid" or "lipid composition" used as the primary or sole binder material of the carrier material, which is selected having the appropriate melt characteristics indicated herein, generally refers to a water insoluble substance that can be extracted by organic solvents of low polarity (e.g., ether or chloroform). In certain applications, such "lipid" or "lipid composition" may be a water soluble material. Lipids having the appropriate melt or moisture release characteristics indicated herein may be selected, for instance, from among, hydrogenated vegetable fats, free fatty acids, trans fatty acids, waxes, lecithin, hydrogenated lecithins, steroids, phosphoglycerides, phospholipids, surfactants, mono-glycerides and derivatives thereof, di-glycerides and derivatives thereof, and combinations thereof. In certain applications, such "lipid" or "lipid composition" may be a water soluble material; such water soluble coating may be applied to a container to which the consumer will add water when prepared to release the food modifying additives.

In a preferred aspect, the lipid is a fat, although other types of lipids also may be used as described herein. For purposes herein, a "fat" is carboxylic ester derived from glycerol, i.e., a glyceride. As generally known, fats are made up of glycerides derived from the same or different types of carboxylic acids, and their types and proportions thereof dictate the type of fat provided and its physical properties. The fat preferably is a triglyceride. The fat can be isolated from a number of plant, animal, and marine life sources, or it can be synthesized chemically.

In one preferred aspect, the fat is a hydrogenated vegetable fat selected from the group consisting of hydrogenated soybean fat, hydrogenated rapeseed fat, hydrogenated cottonseed fat, hydrogenated palm fat, hydrogenated palm kernel fat, hydrogenated coconut fat, and combinations thereof. As known, hydrogenation changes the physical properties of the fat, wherein greater levels of hydrogenation tend to increase the melting point of the fat product, all other relevant factors equal. Commercial sources of such hydrogenated vegetable fats include, for example, Dritex® S flakes, Dritex® SC flakes, Dritex® C flakes, Dritex® PST flakes, Dritex® SC-N flakes, Dritex® RC flakes, and Shurshet® 113 flakes, manufactured by Humko Oil Products (Cordova, TN). The free fatty acids may be selected, for instance, from palm oil, beef tallow, palm kernel oil, coconut oil, and the like, or combinations thereof. The waxes may be selected, for instance, from bees wax, carnauba synthetic wax, and the like or combinations thereof. The lecithin may be selected, for instance, from phospholipid-lecithin, egg lecithin, soybean lecithin, synthetic lecithin, and the like, or combinations thereof. The phosphoglycerides may be selected, for instance, from phosphatidyl inositol, phosphatidylethanolamine, and the like, or combinations thereof. The steroids may be selected, for instance, from animal (e.g., cholesterol) sources, plant (e.g., phytosterols, phytostenols) sources, and the like, or combinations thereof.

In addition to the lipid and food modifier components, the coating optionally may contain other ingredients such as processing aids and other useful food additives. For example, the optional coating ingredients may include surfactants, plasticizers, binders (in addition to the lipid content), gums, antioxidants, colorants, preservatives, antimicrobial agents, and the like, in effective amounts for their intended respective function. These optional ingredients should not adversely interact with the lipid or food modifier incorporated with the coating. To the extent they effect the melt properties of the lipid and overall coating, it should be in a predictable manner compatible with the principles of the invention. The optional ingredients generally are contained in the coating in a total amount not exceeding about 50 percent, particularly not exceeding about 30 percent, and more particularly not exceeding about 10 percent of the coating.

The carrier material containing the lipid generally is formed on the support member at a rate of about 5 to about 100 g/m², particularly about 10 to about 60 g/m², and more particularly about 20 to about 40 g/m², on the support member. In one embodiment, the carrier material containing lipid has a thickness of about 0.008 to about 1 mm, and particularly about 0.02 to about 0.1 mm.

The food modifier is applied onto and/or into the molten carrier material.

The food modifier may rest on, or be partly or fully submerged within, the molten carrier material when deposited thereon, and than it is immobilized in place by cooling or allowing the carrier material to cool and resolidify. Depending on the type of food modifier, it may be applied onto the molten carrier material in a convenient manner, such as sprinkling, spraying, and the like. Once applied, the molten carrier material is cooled or allowed to cool until it resolidifies, and thereby immobilizing the food modifier in position on or in the coating.

The food modifier may be applied intermittently (e.g., as discrete deposits), continuously, or pattern-wise (e.g., lines or other patterns) on a surface of the molten carrier material. In one aspect, after resolidifying the lipid content of the coating, the resulting coating comprises about 20 to about 80 percent lipid and about 20 to about 80 percent food modifier, and particularly 35 to about 55 percent lipid and about 45 to about 65 percent food modifier.

The type of food modifier used is not particularly limited and may comprise an edible material which can modify at least one organoleptic feature of a contacted food product and which does not significantly degrade during preparation or cooking of a food product in contact with the article coating before imparting a desirable effect thereto. These organoleptic features include, for example, taste, aroma, appearance, and texture. The food modifier may be applied to the carrier material in solution or particle form.

The food modifier may be, for example, flavors, spices, fortificants, meat tenderizers, colorants, browning agents, enzymes, crumbs, seeds, coatings, starch, flour, antioxidants, preservatives, antimicrobial agents, and the like as well as mixtures thereof. Flavors include substances which can transfer taste and/or aroma to the receiving surface of a contacted food product. Flavors include seasonings such as sodium or potassium chloride, natural or artificial sweeteners, instant coffee or tea, fruit or cheese powders, and the like and spices such as anise, basil, chili pepper, dill, tarragon, cinnamon, cloves, ginger, garlic, onion, caraway, horseradish, poppy seed, nutmeg, oregano, black pepper, paprika, parsley, peppermint, rosemary, sage, salt, chives, vanilla, lemon, lime, orange, as well as spice mixtures such as curry. The flavor also may be supplied in a flowable form. For instance, the flavor may be vanilla extract or citrus extract. The flavor may be in sauce form (e.g., such as steak sauces, barbecue sauces, ustards, meat marinades, and so forth). The dried sauce-forming ingredients may also be immobilized on the carrier aterial. The non-volatile flavor ingredients of the sauce remain available in the carrier material for food modification as described herein. The flavor also may be a liquid smoke product. Food fortificants that can be used include, for example, minerals (e.g., iron, calcium, iodine, zinc, magnesium, phosphorus, and the like) and/or vitamins (e.g., vitamin A, vitamin B-complexes, vitamin C, vitamin D, vitamin E, folic acid, and the like). The fortificants are used in forms which generally can maintain potency while retained by the carrier material. Enzymes that can be used include meat-tenderizing enzymes, such as papain (i.e., a known meat tenderizing enzyme extract of papaya). The food modifier also may be a food colorant, such as pigments or water soluble dyes (e.g., FD&C colors or lakes). The pigments can include organic dyes absorbed on an insoluble edible base, such as aluminum hydrate. Browning agents may include reactive sugars (i.e., Maillose, Red Arrow Products, Manitowoc WI) which interact with protein to form a brown color (i.e., Maillard browning). Combinations of different types of food modifiers can be applied to the coating.

From an aesthetics standpoint, a white powdery appearance that may arise due to the formation of fat crystals may be eliminated by use of suitable food grade color masking substance or crystal modifying agent.

Microencapsulation of the food modifier compounds may be used to assist in controlling release properties and improving shelf stability. Microencapsulated food modifier capsules can be made, for example, by spray-chilling a water-in-oil (W/O) emulsion of a food modifier, lipid and an emulsifier in a manner generally known and used for microencapsulation of edible materials. Methods other than spray chilling, such as, for example, spinning disc coating, fluidized bed coating, coextrusion, and the like can be used. The microencapsulated food modifier capsules and the like can be deposited and immobilized on or in the carrier material in the same general manner as indicated above for direct deposition of the food modifier thereon, so that the food modifier can be released when the lipid is melted upon cooking a food wrapped or packaged in contact with the article. Preferably, the lipid used for microencapsulation has a higher melting point than the lipid used for the carrier material of the coating, as deposition of microencapsulated food odifier can efficiently proceed in the temperature range between the respective melting points of the carrier material lipid and the microencapsulating lipid material.

Depending on the type of food modifier being used, the coating may be formed generally at a rate of about 5 to about 100 g/m², particularly about 10 to about 60 g/m², and more particularly about 20 to about 40 g/m², on the support member. In one embodiment, the carrier material containing lipid has a thickness of about 0.008 to about 1 mm, and particularly about 0.02 to about 0.1 mm.

The food products that can be modified using the food modifier transferable article of the invention are not particularly limited, and include, for example, meats, fish, vegetables, soy products, cheeses, fruits, baked goods, pastries, nuts, pasta, rice, potatoes, grains, macaroni and cheese, pizza, soups, hot or cold beverages, confectionaries, and the like. The meat can be a raw or partially or fully cooked meat which is expected to receive a cooking or heating treatment. The meat can be beef, poultry, ham, lamb, and meat substitutes.

The Examples that follow are intended to illustrate, and not to limit, the invention. All percentages used herein are by weight, unless otherwise indicated.

**Example 1.** A coated packaging film used for releasing flavor to a food product during cooking was made and evaluated. A partially hydrogenated vegetable fat (45 g), which was provided as partially hydrogenated soybean and cottonseed oils (Dritex® SC flakes, m.p. 125±5°F, Humko Oil Products, Cordova, TN), was placed in beaker and melted using a hot plate as a heating source. Reynolds® Hot Bags® foil bags had been cut into discrete pieces of foil material having a sheet form. The molten fat was cast by pouring it onto the Reynolds® Hot Bags® foil material, and then the foil material bearing the molten fat was pulled through the nip provided by two steel pressure rollers, spreading the molten fat into a substantially uniform coating over on the foil material.

Seasoning (i.e., A-1 Steak House® Savory Pepper Steak Sauce; 0.5 g, Kraft Foods, orthfield IL) was immediately sprinkled at a substantially uniform rate on the fat coating before it solidified upon cooling under room temperature conditions. The seasoned fat coated film was allowed to solidify for a few minutes. A separately fat coated foil material was similarly provided except that it was sprinkled with A-1 Steak House® Garlic and Herb Marinade (0.5 g; Kraft Foods, Northfield IL) as the seasoning. Alternatively, the film could be prepared and solidified; once the seasoning has been applied, the film could be heated (e.g., 350°F for a few seconds) and then re-solidified.

A raw pork chop was wrapped in each seasoned fat coated foil material such that all sides of a chop were contacted by a coated side of the foil material. Three vent holes were poked into the top of the foil material wrapped around the piece of meat. The foil wraps were placed on a Kenmore propane grill heated to a 550°F for 10 minutes. The meat was removed from the wraps and examined immediately following grilling. The grilled meat appeared, tasted, and smelled well-seasoned. No scorching on the meat surfaces was observed.

**Example 2.** A coated packaging film used for releasing encapsulated flavor to a food product during cooking was made and evaluated. A hydrogenated vegetable fat (45 g; Dritex® S flakes) was melted in a beaker using a hot plate. The molten fat was cast onto Reynolds® Hot Bags® foil material in the same manner as Example 1. An encapsulated garlic seasoning (0.5 g Flavorshure 603, Balchem Corp., New Hampton, NY) was immediately sprinkled at a substantially uniform rate on the fat coating before it solidified upon cooling under room temperature conditions. After allowing the seasoned fat coated film to solidify for a few minutes, small pieces of raw boneless chicken breasts were individually wrapped in segments of the seasoned fat coated foil. Three vent holes were poked into the top of the foil material wrapped around the pieces of meat. The wraps containing the chicken were placed on a cookie sheet and baked in an oven at 350°F for 15 minutes. After cooking, the meat had a pleasant appearance, as the seasoning color had transferred from the coating of the packing material to the chicken surfaces. The flavor of the seasoning also had transferred to the meat, resulting in good flavor.

**Example 3.** A packaging film for tenderizing meat during cooking was made and evaluated. A hydrogenated vegetable fat (45 g), which was provided as hydrogenated soybean oil (Dritex® S flakes, m.p. 155.3±2.7°F, Humko Oil Products, Cordova, TN) was melted in a beaker using a hot plate. The molten fat was cast onto Reynolds® Hot Bags® foil material in the same manner as Example 1. A mixture of 0.5 g A-1 Steak House® Garlic and Herb Marinade seasoning and papain was immediately sprinkled at a substantially uniform rate on the fat coating before it solidified upon cooling under room temperature conditions. As is known, papain is a protein-cleaving enzyme derived from papaya and certain plants which is generally known to be a meat tenderizer. The papain-bearing coated film was allowed to solidify for a few minutes. A series of fat-coated films made in this manner were prepared with different levels of papain application.

An approximately 4 oz. skirt steak was wrapped in each fat coated foil material. Three vent holes were poked into the top of the foil wrap material. The wrapped samples were placed on a cookie sheet and baked in an oven at various temperatures and cooking times. The meat in each wrap was examined immediately following cooking. A comparison sample was prepared in which the seasoning mixture was directly applied to the steak before it was wrapped in foil material, instead of applying the seasoning mixture to the fat coating formed on the foil material. In another sample, an additional fat-coated material sample was made in which no papain was applied to the fat coating, but the fat coating was seasoned with 0.5 g A-1 Steak House® Garlic and Herb Marinade seasoning before the steak was wrapped in the foil material. Table 1 below describes the addition rates and manner of application of the papain, seasoning, and cooking conditions, for each tested sample.

**Table 1**

| **Sample** | **Papain Level (g)** | **Substrate for Papain** | **Seasoning (g)** | **Cooking** | |
|---|---|---|---|---|---|
| | | | | **Temp (°F)** | **Time (min.)** |
| 1 | 0.3 | fat-coated film | 0.5 | 300 | 15 |
| 2 | 0.1 | fat-coated film | 0.5 | 300 | 15 |
| 3 | 0.3 | fat-coated film | 0.5 | 450 | 15 |
| 4 | 0.1 | fat-coated film | 0.5 | 450 | 15 |
| 5 | 0.3 | fat-coated film | 0.5 | 300 | 45 |
| 6 | 0.1 | fat-coated film | 0.5 | 300 | 45 |
| 7 | 0.3 | fat-coated film | 0.5 | 450 | 45 |
| 8 | 0.1 | fat-coated film | 0.5 | 450 | 45 |
| 9 | 0.1 | meat | 0.5 | 300 | 15 |
| 10, | 0.1 | meat | 0.5 | 450 | 45 |
| 11 | 0 | none | 0.5 | 300 | 15 |

The toughness of each cooked meat sample was evaluated using an informal sensory panel. The meat of Sample 11, while well-seasoned from a sensory standpoint, was the toughest sample, followed by the meat samples of Samples 2 and 9 which were similar to each other in toughness and texture. The meat in samples 1 and 3-6 were tender and had similar texture. The meat of Samples 7, 8, and 10 were too overcooked to be evaluated. The results for Samples 2, 4, and 6 demonstrate that papain used at relatively lower levels in the fat-coated film could still tenderize the meat where the cooking conditions are appropriately adjusted.

**Example 4.** A coated packaging film used for releasing flavor to a food and browning of a food product during cooking was made and evaluated. A hydrogenated soybean oil (45 g; Dritex® S flakes, m.p. 155.3±2.7°F, Humko Oil Products, Cordova, TN) was melted in a beaker using a hot plate. The molten fat was cast onto Reynolds® Hot Bags® foil material in the same manner as Example 1. Then a mixture of 83 percent seasoning (i.e., Fajita Seasoning, Penzeys Spices, Brookfield WI) and 17 perecent browning agent (i.e., Maillose, Red Arrow Products, Manitowoc WI) was sprinkled onto the sheet. The sheet was then placed in a 350°F oven to remelt the fat. The sheet was then removed from the oven allowing the fat to re-solidify, thereby adhering the powdered mixture to the sheet. After allowing the seasoned fat coated film to sit for few minutes, small pieces of raw boneless chicken breasts were individually wrapped in segments of the seasoned fat coated foil. Three vent holes were poked into the top of the foil material and wrapped around the pieces of meat. The wrap containing the chicken was placed on a cookie sheet and baked in an oven at 350°F for 15 minutes. After cooking, the meat had a pleasant appearance due to the seasoning transfer onto the surface of the chicken and a browned appearance. No off-flavors were observed.

**Example 5.** A coated packaging film used for releasing flavor to a food and creating a sauce during cooking was made and evaluated. A hydrogenated soybean oil (45 g; Dritex® S flakes, m.p. 155.3"2.7EF, Humko Oil Products, Cordova, TN) was melted in a beaker using a hot plate. The molten fat was cast onto Reynolds® Hot Bags® foil material in the same manner as Example 1. Then a mixture 62.5 percent modified potato starch (i.e., Farinex VA 40, Avebe, Princeton NJ) and 37.5 percent maltodextrin (i.e., Star-Dri 10, Tate and Lyle, Decatur IL) was sprinkled onto the sheet. The sheet was then placed in a 350°F oven where the fat remelted. The sheet was then removed from the oven allowing the fat to re-solidify, thereby adhering the powdered mixture to the sheet. Next, the sheet was sprayed with partially hydrogenated soybean and cottonseed oil (Dritex® SC flakes, m.p. 125±5°F, Humko Oil Products, Cordova, TN) using a heated spraying system (hhs America Gluing Systems, Dayton, OH). Then the sheet (37 x 20 cm) was sprinkled with about 3.5g seasoning (i.e., Fajita Seasoning, Penzeys Spices, Brookfield WI) and placed into the 350°F oven to melt the fat and adhere the seasoning to the sheet. After allowing the seasoned fat coated film to sit for few minutes, small chicken breasts (approximately 125 g) were individually wrapped in segments of the seasoned fat coated foil. The foil was wrapped around the pieces of meat to form a bag. Forty grams of water was were added to the bag and three vent holes were poked into the top. The wrapped chicken was placed on a cookie sheet and baked in an oven at 375°F for 20 minutes. After cooking the meat had a pleasant appearance and a seasoned sauce. The sauce coated the meat and had a flavoring of the seasoning.

**Example 6.** A coated film used for releasing flavor to a food product during cooking was made and evaluated using various combinations of three different lipids. The three lipids used were soybean oil (Soybean Oil, Humko Oil Products, Cordova, TN), hydrogenated soybean oil (Dritex® S flakes, m.p. 155.3±2.7°F, Humko Oil Products, Cordova, TN), and partially hydrogenated soybean and cottonseed oil (Dritex® SC beads, m.p. 125±5E°F, Humko Oil Products, Cordova, TN). Samples were made using the same casting method from Example 4 but with only seasoning (i.e., Fajita Seasoning, Penzeys Spices, Brookfield Wl) being added after the lipid layer. Table 2 below describes the percentages of lipids used in each sample.

**Table 2**

| **Sample** | **Soybean Oil** | **Hydrogenated Soybean Oil** | **Partially Hydrogenated Soybean/Cottonseed Oil** |
|---|---|---|---|
| 1 | 50 | 50 | 0 |
| 2 | 66.7 | 33.3 | 0 |
| 3 | 80 | 20 | 0 |
| 4 | 50 | 0 | 50 |
| 5 | 66.7 | 0 | 33.3 |
| 6 | 80 | 0 | 20 |

After allowing the seasoned fat coated film to sit for few minutes, small chicken breasts (approximately 125 g) were individually wrapped in segments of the seasoned fat coated foil. The foil was wrapped around the pieces of meat. The wrap containing the chicken was placed on a cookie sheet and baked in an oven at 375°F for 20 minutes. After cooking the meat had a pleasant appearance and a good flavor due to the seasoning being transferred from the packaging material to chicken surfaces.

**Example 7.** A coated packaging film used for releasing flavor to a food product during cooking was made and evaluated. A partially hydrogenated soybean and cottonseed oil (45 g; Dritex® SC beads, m.p. 125±5°F, Humko Oil Products, Cordova, TN) was melted in a beaker using a hot plate. The molten fat was then put into a heated spraying system (hhs America Gluing Systems, Dayton, OH) to be sprayed on the interior of microwavable crystallized polyester tray (15.2 x 7.6 x 2.5 cm). Then the tray was sprinkled with cheese powder (from Kraft Easy Mac® ) and placed into a 350°F for a few seconds to allow the fat to melt and adhere the powder to the inner portion of the container. After the container was coated with powder, 20 grams of thin-walled pasta and 78 milliliters of water were added to the container. The product was cooked on high in the microwave for approximately two and a half minutes. Upon removing the product from the microwave it was stirred and resulted in a cooked pasta and cheese food product. The pasta with cheese was tasted and provided a good tasting product.

**Example 8**. A coated packaging film used for releasing flavor to a food product during cooking was made and evaluated. A partially hydrogenated soybean and cottonseed oil (45 g; Dritex® SC beads, m.p. 125±5°F, Humko Oil Products, Cordova, TN) was melted in a beaker using a hot plate. The molten fat was then put into a heated spraying system (hhs America Gluing Systems, Dayton, OH) to be sprayed onto a piece of parchment paper (about 37 x 20 cm). The parchment paper was next sprinkled with seasoning (i.e., Fajita Seasoning, Penzeys Spices, Brookfield WI) and then reheated in a 350°F oven to allow the fat to remelt and adhere the seasoning to the parchment.

**Example 9**. A coated packaging film containing multiple lipid layers used for releasing flavor to a food during cooking was made and evaluated. A hydrogenated soybean oil (45 g; Dritex® S flakes, m.p. 155.3±2.7°F, Humko Oil Products, Cordova, TN) were melted in a beaker using a hot plate. The molten fat was cast onto Reynolds® Hot Bags® foil material in the same manner as Example 1. Then seasoning (i.e., Fajita Seasoning, Penzeys Spices, Brookfield WI) was sprinkled onto the sheet. The sheet was then placed in a 350°F oven where the fat remelted. The sheet was then removed from the oven allowing the fat to re-solidify, thereby adhering the seasoning mixture to the sheet. Next, the sheet was sprayed with partially hydrogenated soybean and cottonseed oil (Dritex® SC flakes, m.p. 125±5°F, Humko Oil Products, Cordova, TN) using a heated spraying system. Then the sheet was sprinkled with seasoning (i.e., Fajita Seasoning, Penzeys Spices, rookfield WI) and placed into the 350°F oven to remelt the fat and adhere the seasoning to the sheet. After allowing the seasoned fat coated film to sit for few minutes, small chicken breasts (approximately 125 g) were individually wrapped in segments of the seasoned fat coated foil to form a bag. Three vent holes were poked into the top of the foil material. The wrap containing the chicken was placed on a cookie sheet and baked in an oven at 375°F for 20 minutes. After cooking the meat had a pleasant appearance and seasoned flavor.

While the invention has been particularly described with specific reference to particular process and product embodiments, it will be appreciated that various alterations, modifications and adaptions may be based on the present disclosure, and are intended to be within the spirit and scope of the present invention as defined by the following claims.

## Claims

1. An article for transferring a food modifier to a food, comprising a coating supported on a support member, wherein the coating comprises a carrier material containing lipid which releasably retains a food modifier and wherein the coating is operable to release the food modifier from the lipid upon activation such that the food modifier is controllably transferrable to the food, wherein activation is by increasing temperature of the coating or exposure of the coating to moisture.

2. The article of Claim 1, wherein the activation is by increasing the temperature.

3. The article of Claim 1, wherein the activation is by exposure to moisture.

4. The article of any one of Claims 1 to 3, wherein lipid comprises a fat.

5. The article of any one of Claims 1 to 3, wherein lipid is selected from the group consisting of hydrogenated vegetable fats, free fatty acids, trans fatty acids, waxes, lecithin, hydrogenated lecithins, steroids, phosphoglycerides, phospholipids, surfactants, mono-glycerides and derivates thereof, di-glycerides and derivatives thereof and combinations.

6. The article of Claim 5, wherein the hydrogenated vegetable fat is selected from the group consisting of hydrogenated soybean fat, hydrogenated rapeseed fat, hydrogenated cottonseed fat, hydrogenated palm fat, hydrogenated palm kernel fat, hydrogenated coconut fat, and combinations thereof.

7. The article of any one of Claims 1 to 5, wherein the lipid has a melting point greater than about 85°F.

8. The article of any one of Claims 1 to 7, wherein the food modifier is selected from the group consisting of flavors, acids, spices, sweeteners, salts, fortificants, colorants, browning agents and enzymes.

9. The article of any one of Claims I to 8, wherein the food modifier is microencapsulated.

10. The article of any one of Claims 1 to 9, wherein the support member is selected from the group consistinv of plastic, paper, paperboard, metal, fabric, and glass.

11. The article of any one of Claims 1 to 10, wherein the support member comprises a sheet having a continuous surface.

12. The article of any one of Claims 1 to 11, wherein the support member is nondegradable at temperatures up to about 450°F.

13. The article of any one of Claims I to 12, wherein the coating comprises about 35 to about 95 percent lipid and about 5 to about 65 percent food modifier.

14. The article of any one of Claims 1 to 13, wherein the coating is formed at a rate of about 20 to about 40 g/m² on the support member.

15. A packaged food comprising:
(A) a food product; and
(B) an article comprising a coating, in contact with the food product, which is supported on a support member, wherein the coating comprises a carrier material containing a lipid which releasably retains a food modifier and wherein the coating is operable to release the food modifier and the lipid upon activation so that the food modifier is transferrable to the food product in contact with the coating, wherein the activation is by increasing temperature of the coating or by exposure of the coating to moisture.

16. The packaged food of any one of Claims 15 to 17, wherein the article substantially surrounds the edible material.

17. The packaged food of Claim 15 or 16, wherein the food product is selected from the group consisting of meats, fish, vegetables, soy products, cheeses, fruits, nuts, baked goods, pastries, pasta, rice, potatoes, grains, macaroni and cheese, pizza, soups, beverages and confectionaries.

18. The packaged food of any one of Claims 15 to 17, wherein the food product comprises raw meat and the food modifier comprises a meat seasoning, a meat tenderizing enzyme, or mixtures thereof.

19. The packaged food of any one of Claims 15 to 18 wherein the article comprising the coating is the article for transferring a food modifier to a food of any one of Claims 1 to 14.

20. A process for treating a food product with a food modifier during preparation, said process comprising:
(1) contacting a surface of a food product with an article comprising a coating supported on a support member, wherein the coating comprises a carrier material containing lipid which releasably retains a food modifier, and wherein the coating is operable to release the food modifier and the lipid upon activation so that the food modifier is transferrable to the food product in contact with the coating; and
(2) activating the release of the food modifier so that at least a portion of the food modifier to transfer to the food product, wherein activation is by increasing the temperature of the coating above the melting point of the lipid or by exposure of the coating to moisture.

21. The method of Claim 20, wherein activation is by increasing the temperature.

22. The method of Claim 20, wherein activation is by exposure to moisture.

23. The process of Claim 21, wherein the temperature is increased by a cooking method selected from the group consisting baking, grilling, broiling, frying, sauteeing, boiling, and microwaving.

24. The process of any one of Claims 20 to 23, wherein the contacting comprises substantially surrounding the edible material with the article and wherein the support member is selected from the group consisting of plastic, paper, paperboard, metal, fabric, and glass.

25. The process of any one of Claims 20 to 23, wherein the food modifier is selected from the group consisting of flavors, spices, acids, sweeteners, salts, fortificants, colorants, browning agents, and enzymes.

26. The process of Claim 25, wherein the food modifier is microencapsulated.
